# EUROPEAN PATENT SPECIFICATION

(11) **EP 1 542 225 B1**
(45) Date of publication and mention of the grant of the patent: **23.07.2008**
(21) Application number: 04257630.6
(22) Date of filing: 08.12.2004
(51) Int. Cl.: G11B 17/04, G11B 33/12

(54) **Disk device having reinforcing structure**
Verstärkte Struktur für Plattenantriebsgerät
Structure renforcée d'un dispositif d'entraînement de disque

(30) Priority: 10.12.2003 JP 2003411937
(43) Date of publication of application: 15.06.2005
(73) Proprietor: ORION ELECTRIC CO., Ltd., Takefu-City, Fukui 915-8555 (JP)
(72) Inventor: Makino, Takeshi c/o Orion Electric Co, Ltd, Takefu-city, Fukui 915-8555 (JP); Nishide, Masahiko c/o Orion Electric Co, Ltd, Takefu-city Fukui 915-8555 (JP); Kobayashi, Yuichi c/o Orion Electric Co, Ltd, Takefu-city Fukui 915-8555 (JP)
(74) Representative: Paget, Hugh Charles Edward

(56) References cited:
- EP-A- 0 613 133
- EP-A- 0 843 314
- EP-A- 0 905 687
- US-A- 4 012 089
- US-A1- 2001 043 544
- US-A1- 2002 093 899
- US-B1- 6 234 591
- US-B1- 6 275 459
- PATENT ABSTRACTS OF JAPAN vol. 2002, no. 05, 3 May 2002 (2002-05-03) & JP 2002 015554 A (TOSHIBA CORP), 18 January 2002 (2002-01-18)

## Description

### BACKGROUND OF THE INVENTION

### Field of the Invention

The present invention relates to a disk device having a reinforcing structure by which the strength of the disk device is improved. More specifically, the invention relates to a disk device in which a frame constituting the disk device is partially formed to have a double rib structure.

### Description of the Related Art

In a conventionally used disk device built into an electronic apparatus, an electronic apparatus or the like including a disk device that is capable of recording/reading videos and sounds in/from the disk placed on a retractable tray serving as a movable portion provided in the disk device has been used.

In recent years, in a product in which a disk device is built into such an electronic apparatus, in response to various needs of users, the disk device has been built into a television receiver or an electronic apparatus or the like having a radio function or the like.

A structure of the disk device built into such an electronic apparatus is disclosed, for example, in the Japanese Patent Laid-Open No. 2003-196951.

However, in the prior art, various devices and components are built into the electronic apparatus, and due to their weight, deform or the like of a casing which constitutes the body of the electronic apparatus has been a problem. In addition, most of the various devices and components built into the electronic apparatus generate heat when operated, and the heat generated by these devices and components tend to increase the deform or the like in the casing particularly when they are densely built into the relevant electronic apparatus to reduce the size or the like. Accordingly, in the electronic apparatus built into the disk device, there has been a problem that the deformation and the like of the frame in the electronic apparatus makes the smooth movement of the retractable tray provided for placing a disk thereon difficult.

JP-A-2002-15554 shows a disk device having a slidable tray and a frame having side walls of a double wall structure.

This document is considered to represent the closest prior art.

### SUMMARY OF THE INVENTION

The present invention has been devised in view of the problems described above, and aims at providing a disk device having a reinforcing structure excellent in strength that prevents the disk device from deforming due to the deforming of the casing of the electronic device or due to heat generated by various devices and components built into the electronic device.

The present invention provides a disk device as set out in claim 1.

The frame constituting the disk device in the invention is generally made of resin. The disk device comprises a tray for placing a disk thereon, and typically has a mechanism for making the tray open and close, a traverse unit for reading and the like of the disk, which are built therein.

The frame is generally formed in a box shape with a right side surface portion and a left side surface portion. A front portion of the frame is opened so that the tray for placing a disk which is arranged in the frame is capable of sliding out from the frame and retracting therein.

Since the frame constituting the disk device is partially formed to have a double wall structure, the frame has improved strength.

In the present invention, the frame portions between front leg portions and rear leg portions, which are provided for disposing the disk device in the frame, are formed to have the double wall structure.

In the frame constituting the disk device, leg portions are formed to dispose the disk device in the electronic apparatus. The leg portions are provided at four corners of the frame for stability of the disk device. In other words, the leg portions are provided in the front and the rear positions of both left and right side surfaces of the frame. In the above-described structure, forming the frame portion between the front leg portions and the rear leg portions to have the double wall structure means that the frame between the front and the rear leg portions provided on the side surfaces of the frame is of the double wall structure.

According to the above-described structure, it is possible to enhance the strength of the frame effectively without complicating the structure of the frame unnecessarily. In other words, it is not always necessary to reinforce the frame entirely because deformation or the like tend to occur in, for example, portions simply formed in a plate shape. In portions where the leg portion is provided, because the leg portion itself exerts a function of a reinforcing structure, it is not necessary to reinforce the structure. Therefore, it is possible to enhance the strength of the frame effectively with the double wall structure without complicating the structure of the frame unnecessarily by reinforcing only the portions excluding the areas where the leg portion is provided.

According to the present invention, the frame portions having the double wall structure have a cross-sectional shape formed in an angulated U-shape opening downward.

The strength of the frame is further enhanced by forming the cross-sectional surface of the frame portion having the double wall structure in an angulated U-shape.

### BRIEF DESCRIPTION OF THE DRAWINGS

FIG. 1 is a perspective view showing one preferred embodiment of an electronic apparatus including a disk device according to the embodiment of the present invention;
FIG. 2 is a perspective view of the disk device according to the embodiment of the present invention;
FIG. 3 is a perspective view of the disk device viewed from a bottom side of a frame according to the embodiment of the present invention;
FIG. 4 is a plan view showing an internal structure of the disk device according to the embodiment of the present invention;
FIG. 5 is a perspective view of the disk device with one portion of a side frame notched according to the embodiment of the present invention;
FIG. 6 is a plan view showing an internal structure in a state in which a tray of the disk device is closed according to the embodiment of the present invention;
FIG. 7 is a plan view of the frame of the disk device according to the embodiment of the present invention;
FIG. 8 is a bottom view of the frame of the disk device according to the embodiment of the present invention;
FIG. 9 is a side view of the frame of the disk device according to the embodiment of the present invention; and
FIG. 10 is a cross sectional view of the frame of the disk device according to the embodiment of the present invention.

### DETAILED DESCRIPTION OF THE PREFERRED EMBODIMENTS

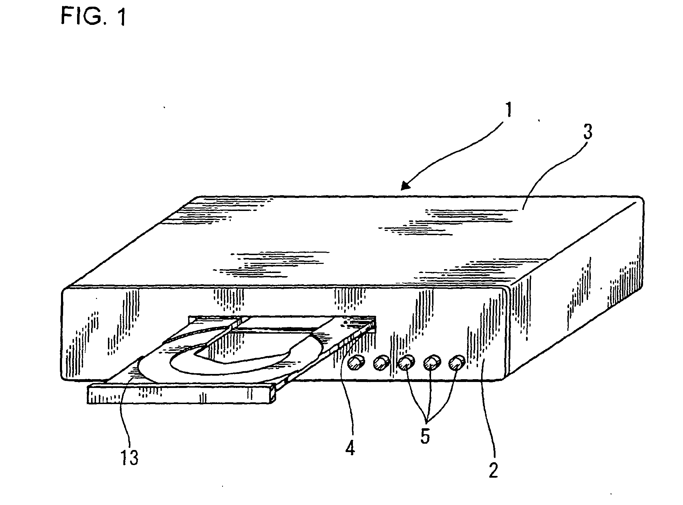

Now, the preferred embodiment of the present invention will be explained hereinafter with reference to FIG. 1 through 5. Please note that the following embodiment is a mere example for embodying the invention and are not intended to limit the invention within the scopes of the embodiments.

FIG. 1 is a perspective view showing one preferred embodiment of an electronic apparatus including a disk device.

An electronic apparatus 1 has its entire shape formed in a box shape by a front panel 2 and a casing 3, both of which are flat panels. The front panel 2 disposed at the front surface of the electronic apparatus 1 is detachably attached to the casing 3, and an opening 4 is formed substantially at the center of the front panel 2.

In addition, plural operation buttons 5 are provided on appropriate positions of the front panel 2. By operating these operation buttons 5, opening and closing of a tray which will be described later, and recording or reading or the like will be performed. Note that the functions of these operation buttons 5 are not limited to those described above, and these operation buttons 5 may function in various ways.

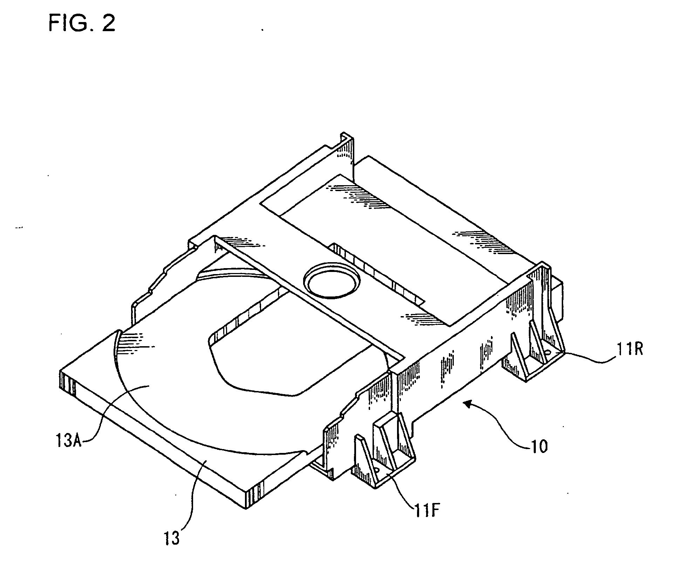

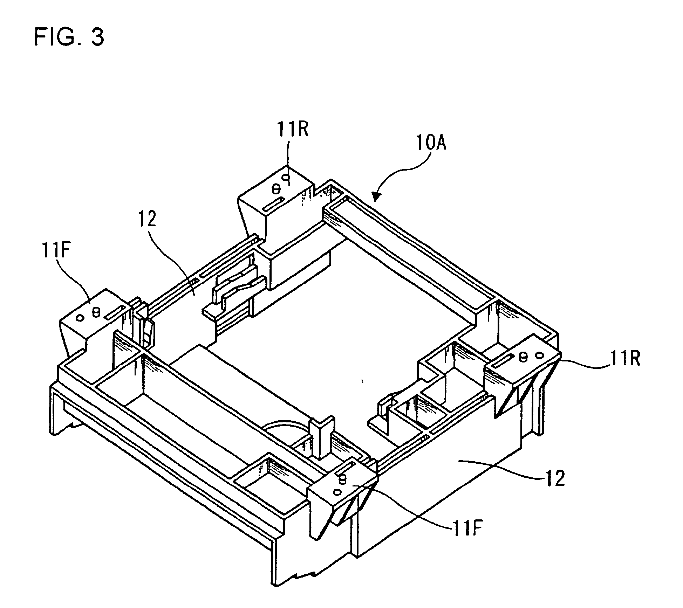

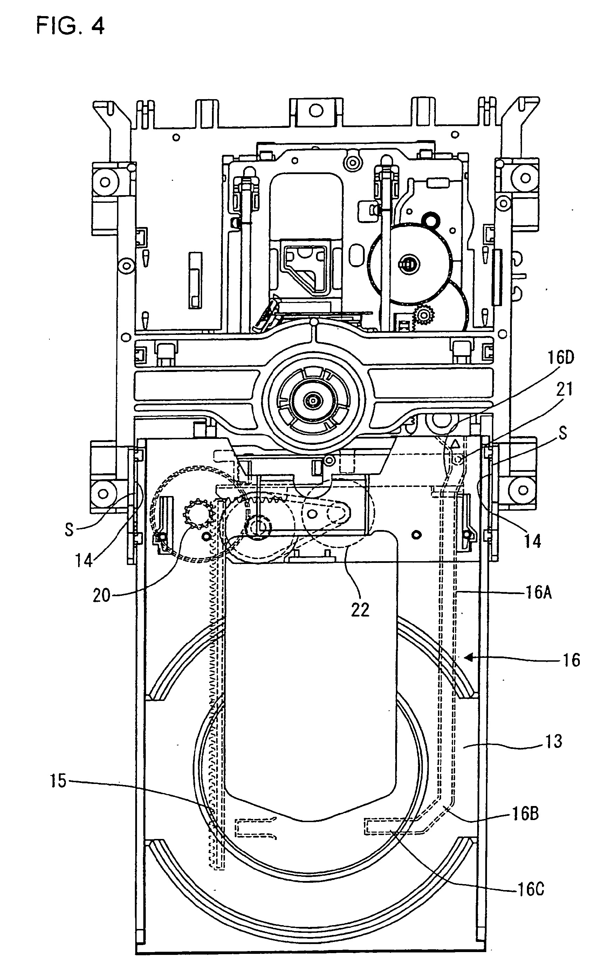

FIG. 2 is a perspective view of the disk device 10 built into the electronic apparatus 1 viewed from an upper position. FIG. 3 is a perspective view of a frame 10A viewed from a bottom side. FIG. 4 is a plan view showing an internal structure of the disk device 10.

As shown in FIG. 2, an open-closable tray 13 for placing a disk thereon is provided in the disk device 10. This tray is arranged to advance and retract via the opening 4 at the front panel of the electronic apparatus 1 described above.

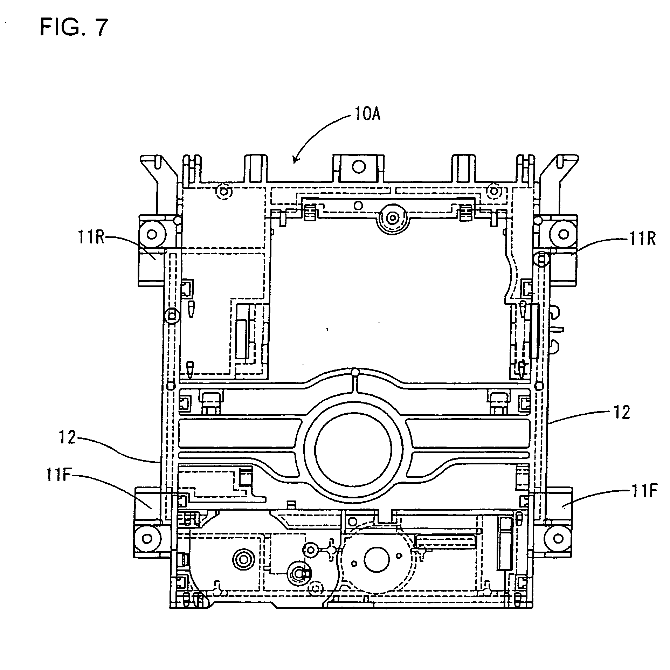

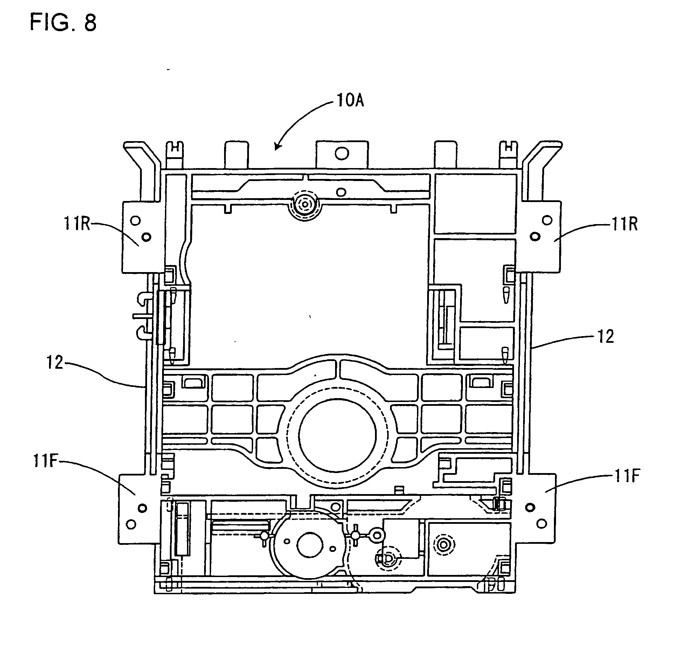

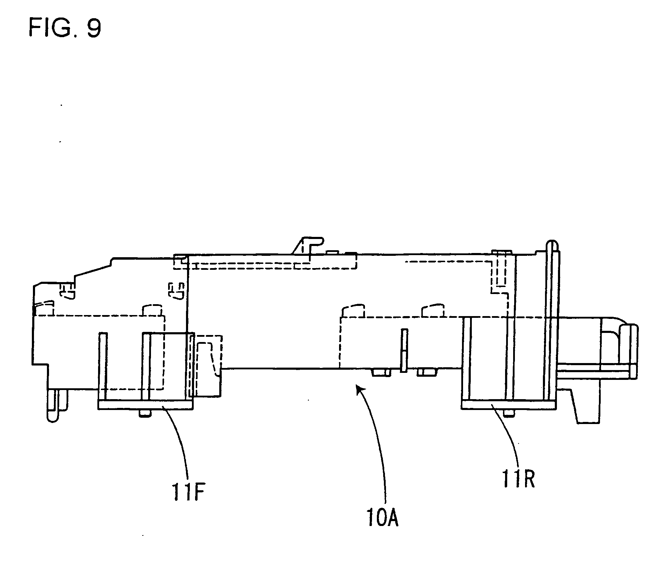

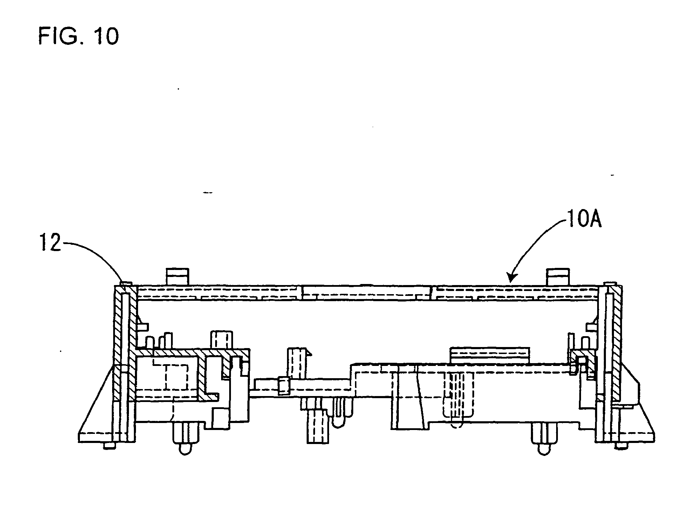

Moreover, the whole disk device 10 is formed of a frame 10A generally made of resin. FIG. 7 is a plan view of the frame 10A of the disk device according to the embodiment of the present invention, FIG. 8 is a bottom view of the same, FIG. 9 is a side view of the same, and FIG. 10 is a cross-sectional view of the same. The frame 10A is generally formed in a box shape comprising a right side wall portion and a left side wall portion. In a front portion of the frame 10A is formed an opening so that the tray for placing a disk, which is built in the frame, is capable of popping out from the frame. Leg portions are integrally formed at the four corners of the frame 10A. More specifically, the leg portions are formed by front leg portions 11F disposed at the front position of the disk device 10 and rear leg portions 11R disposed at the rear position of the same. The disk device 10 is detachably attached by screwing to an appropriate position of the casing 3 of the electronic apparatus 1 via the front leg portions 11F and the rear leg portions 11R.

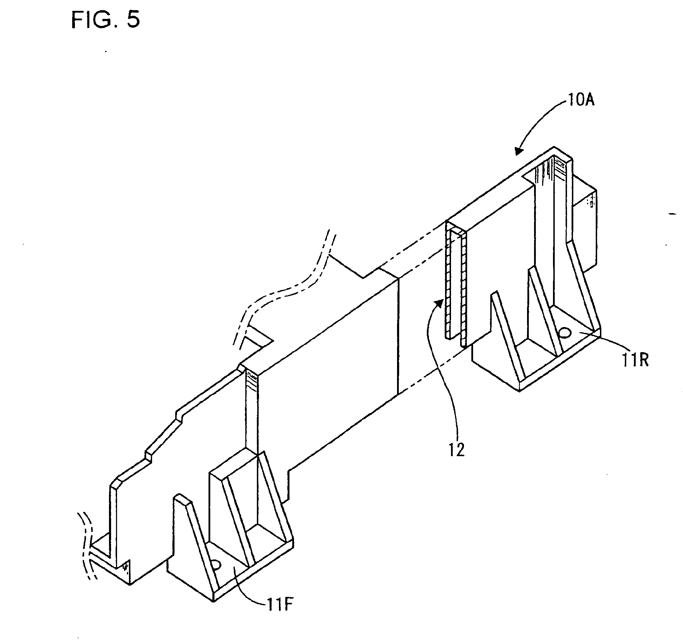

In addition, reinforcing portions 12 having a double wall structure, wherein the cross-sectional shape of the frame is formed in an angulated U-shape as shown in FIGS. 3 and 5, are formed between the front leg portions 11F and the rear leg portions 11R integrally formed to the frame 10A. Consequently, for example, even in the disk device 10 having plural components concentrically disposed and thus heavy in weight, the present invention can prevent the deformation of the frame 10A of the disk device 10 unfailingly.

Reference number 13 is a tray for placing a disk thereon, and this tray 13 is arranged so that it is capable of moving along internal side portions 14 of the reinforcing portions 12. Note that extremely small spaces S are provided between the tray 13 and the internal side portions 14, respectively. The spaces S described in the embodiment of the present invention are 2 mm or less.

In addition, a circular groove 13A for placing a disk on the upper surface of the tray 13 is formed to match a circular shape of a disk as shown in FIG. 2. On the contrary, on a lower side of the tray 13, a tray rack 15 is provided in a longitudinal direction of the disk device 10 as shown in FIG. 4. A substantially L-shaped tray guide groove 16 is disposed along the tray rack 15.

The tray rack 15 engages with a gear 20 for sliding out and retracting the tray 13 and to open/close the tray, and a cam rod boss 21 is loosely fit to the tray guide groove 16. A motor 22 serving as a power supply means drives the gear 20 to rotate, whereby the gear 20 advances and retracts the tray rack 15.

Note that the tray 13 performs sliding out and retracting operations in a predetermined distance, in other words, opens and closes the tray in a predetermined distance, so that a user can place a disk on the tray 13.

Furthermore, the tray guide groove 16 is formed by a longitudinal guide groove portion 16A arranged parallel to the tray rack 15, an inclined guide groove portion 16B inclined to be extended from the longitudinal guide groove portion, and a lateral guide groove portion 16C formed in a perpendicular directionwith respect to the longitudinal guide groove portion 16A. A curved portion 16D is formed at a rear end of the longitudinal guide groove portion 16A.

According to the above-described arrangement, in a state in which the tray 13 advances, that is, a state in which the tray 13 is open, as shown in FIG. 4, the curved portion 16D of the tray guide groove 16 comes into abutment against the cam rod boss 21, whereby the tray 13 is locked to stop. On the contrary, in a state in which the tray 13 retracts, that is, a state in which the tray 13 is closed, the cam rod boss 21 comes into abutment against the inclined guide groove portion 16B, whereby the tray 13 is locked to stop. In other words, the tray 13 is operated to open and close guided by the cam rod boss 21 in the tray guide groove portions 16.

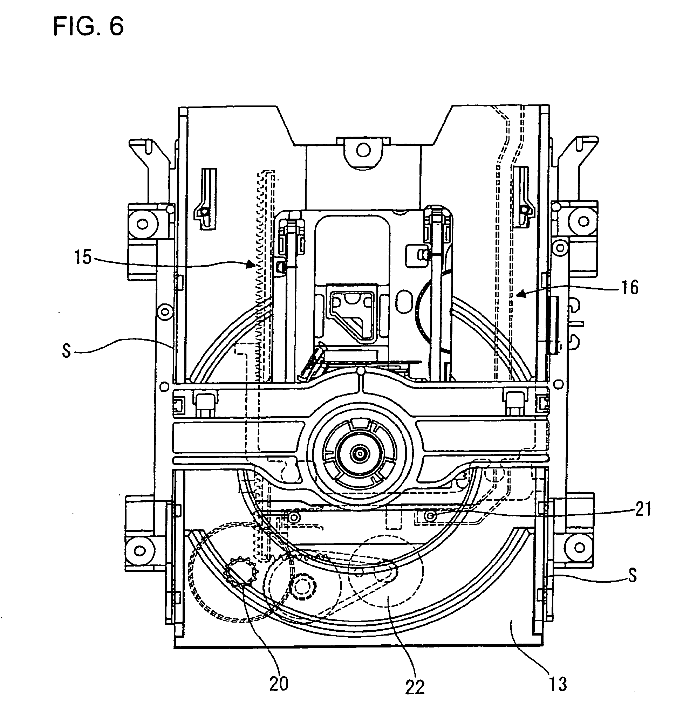

FIG. 6 is a drawing showing a state in which the tray retracts to close. In a state in which the tray 13 is closed, the cam rod boss 21 is located in the inclined guide groove portion 16B of the tray guide groove portion 16, whereby the tray 13 stops. When the gear 20 rotates from this state, the cam rod boss 21 moves along the lateral guide groove portion 16C.

By forming the frame between the front leg portions 11F and the rear leg portions 11R to have the double wall structure, even in the disk device having plural components concentrically disposed and heavy in weight, it is possible to prevent the deformation of the frame unfailingly, and when the movable portion such as the tray operates, it is possible to support the tray 13 to operate smoothly without failure. Thus, it is possible to provide a disk device 10 that has excellent reliability and has few failures.

In the present disk device, even in a disk device having plural components concentrically disposed and heavy in weight, and even when the heat of the various devices and components in the electronic apparatus having the disk device is generated therein during operation, the present invention can prevent the deformation of the frame in the disk device. Furthermore, the disk device can support the operation of the tray smoothly and unfailingly when the movable portion such as the tray is operated, so a disk device excellent in reliability with few failures is provided.

In addition, since the deformation of the frame of the disk device is prevented, sliding out and retracting movements of the tray are not hindered even when the space between the tray and the frame is extremely small. Thus, it is possible to reduce the space between the tray and the frame as much as possible and save the space occupied by the device.

In this disk device, it is possible to enhance the strength of the frame effectively without complicating the structure of the frame unnecessarily.

It is possible to enhance the strength of the frame by forming the frame portion having the double rib structure to have a cross-sectional shape formed in an angulated U-shape.

## Claims

1. A disk device for an electronic apparatus having
a frame (10A) having opposed, spaced side walls,
a tray (13) for carrying a disk having at its upper side a surface on which in use a disk is placed, the tray being arranged to advance and retract slidingly relative to the frame with small spaces between the side edges of the tray and the inner faces of said side walls of the frame,
said side walls of the frame having a double wall structure,
**characterised in that**:
said side walls of said frame have integrally formed front and rear leg portions (11F, 11R) by which the frame is mountable in an electronic apparatus,
said double wall structure of said side walls has, in cross-section an inverted angulated U-shape with the base of the U-shape at the top of the side walls, the double wall structure being open only at the bottom of the frame (10A), and
said double wall structure of each side wall extends over the whole distance between said front and rear leg portions.

## Patentansprüche

1. Plattenvorrichtung für ein elektrisches Gerät mit
einem Rahmen (10A) mit einander gegenüberliegenden, beabstandeten Seitenwänden,
einer Schublade (13) zum Tragen einer Platte, die auf ihrer oberen Seite eine Oberfläche aufweist, auf die bei Gebrauch eine Platte platziert wird, wobei die Schublade angeordnet ist, um in Bezug auf den Rahmen in den zwischen den Seitenkanten der Schublade und den Innenflächen der Seitenwände des Rahmens bestehenden, kleinen Zwischenräumen vor- und zurückzugleiten,
wobei die Seitenwände eine Doppelwandstruktur aufweisen, **dadurch gekennzeichnet, dass** die Seitenwände des Rahmens einstückig ausgebildete, vordere und hintere Schenkelabschnitte (11 F, 11 R) aufweisen, mit denen der Rahmen in einem elektronisches Gerät anbringbar ist,
wobei die Doppelwandstruktur der Seitenwände im Querschnitt eine umgekehrt gewinkelte U-Form aufweist, wobei die Basis der U-Form an der Oberseite der Seitenwände vorliegt und die Doppelwandstruktur nur an der Unterseite des Rahmens (10A) offen ist, und
sich die Doppelwandstruktur jeder der Seitenwände über den gesamten Abstand zwischen den vorderen und hinteren Schenkelabschnitten erstreckt.

## Revendications

1. Dispositif de disque pour un appareil électronique comportant
un châssis (10A) ayant des parois latérales opposées espacées,
un plateau (13) pour porter un disque ayant à son côté supérieur une surface sur laquelle, en cours d'utilisation, un disque est placé, le plateau étant agencé pour avancer et se rétracter d'une manière coulissante relativement au châssis avec de petits espaces entre les bords latéraux du plateau et les faces intérieures desdites parois latérales du châssis,
lesdites parois latérales du châssis ayant une structure à paroi double,
**caractérisé en ce que** :
lesdites parois latérales dudit châssis ayant des portions de branche avant et arrière formées intégralement (11F, 11R) par lesquelles le châssis peut être installé dans un appareil électronique,
ladite structure à paroi double desdites parois latérales possède, en section transversale, une forme en U angulaire inversée, la base de la forme en U se trouvant au sommet des parois latérales, la structure à paroi double étant ouverte seulement au fond du châssis (10A), et
ladite structure à paroi double de chaque paroi latérale s'étend sur toute la distance entre lesdites portions de branche avant et arrière.
